# EUROPÄISCHE PATENTANMELDUNG

(11) **EP 3 296 238 A1**
(43) Veröffentlichungstag der Anmeldung: **21.03.2018**
(21) Anmeldenummer: 16189664.2
(22) Anmeldetag: 20.09.2016
(51) Int. Cl.: B65G 47/90, B65G 47/91, B65G 57/081, B65B 63/04

(54) **AUFNAHMEVORRICHTUNG FÜR VERPACKUNGEN**

(71) Anmelder: MULTIVAC Sepp Haggenmüller SE & Co. KG, 87787 Wolfertschwenden (DE)
(72) Erfinder: WINTERGERST, Bernd, 87749 Hawangen (DE)
(74) Vertreter: Grünecker Patent- und Rechtsanwälte PartG mbB

(57) **Zusammenfassung**

Die Erfindung bezieht sich auf eine Aufnahmevorrichtung (1) für Verpackungen (21), umfassend: einen Rahmen (2), an dem ein erstes und ein zweites Halteelement (3, 4) montiert sind, die jeweils eine Halteseite (5, 6) aufweisen, die jeweils zum Halten einer Verpackung (21) oder eines Verpackungsabschnitts (21 a, 21 b) eingerichtet sind. Das erste und das zweite Halteelement (3, 4) sind dazu eingerichtet, in einer Ausgangsposition derart angeordnet zu sein, dass die erste und die zweite Halteseite (5, 6) nebeneinander und miteinander fluchtend ausgerichtet sind. Sowohl das erste als auch das zweite Halteelement (3, 4) sind um eine gemeinsame Schwenkachse (20) schwenkbar, sodass in einer ersten Endposition sowohl das erste als auch das zweite Halteelement (3, 4) gegenüber der Ausgangsposition um jeweils einen ersten und einen zweiten Winkel (27, 28) verschwenkt angeordnet sind.

Die Erfindung bezieht sich außerdem auf verschiedene Verfahren zum Betreiben einer solchen Aufnahmevorrichtung.

## Beschreibung

Die Erfindung bezieht sich auf eine Aufnahmevorrichtung für Verpackungen.

Eine Aufnahmevorrichtung für Verpackungen, wie z. B. Säcke, ist beispielsweise aus der DE 693 06 083 T2 bekannt. Dort werden Verpackungen durch sogenannte Klauen aufgenommen, die die Verpackungen von oben umgreifen. Solche und ähnliche Lösungen sind für verschiedene Verpackungen und Anwendungsgebiete ungeeignet, da ausreichend Raum für die Bewegung der umgreifenden Klaue vorgesehen sein muss. Insbesondere muss sichergestellt sein, dass die aufzunehmenden Verpackungen sowohl von oben als auch von unten zugänglich sind, so dass die Vorrichtung sie umgreifen kann. Außerdem sind die Handhabungsmöglichkeiten nach dem Aufnehmen und beim Absetzen eingeschränkt.

Aufgabe der Erfindung ist es, eine verbesserte und vor allem flexibler einsetzbare Aufnahmevorrichtung anzugeben.

Diese Aufgabe wird erfindungsgemäß gelöst mit einer Aufnahmevorrichtung mit den Merkmalen des Anspruchs 1. Die Aufgabe wird auch gelöst durch Verfahren zum Betreiben einer solchen Aufnahmevorrichtung mit den Merkmalen der Ansprüche 14 oder 15.

Die erfindungsgemäße Aufnahmevorrichtung für Verpackungen umfasst einen Rahmen, an dem ein erstes und ein zweites Halteelement montiert sind, die jeweils eine Halteseite aufweisen, die jeweils zum Halten einer Verpackung oder eines Verpackungsabschnitts eingerichtet ist. Das erste und das zweite Halteelement sind dabei dazu eingerichtet, in einer Ausgangsposition derart angeordnet zu sein, dass die erste und die zweite Halteseite nebeneinander und miteinander fluchtend ausgerichtet sind. Sowohl das erste als auch das zweite Element sind dabei um eine gemeinsame Schwenkachse schwenkbar, so dass in einer ersten Endposition sowohl das erste als auch das zweite Halteelement gegenüber der Ausgangsposition um jeweils einen ersten und einen zweiten Winkel verschwenkt angeordnet sind, wobei sowohl der erste als auch der zweite Winkel größer als Null sind. Dadurch, dass die jeweiligen Halteseiten jeweils zum Halten einer Verpackung oder eines Verpackungsabschnitts eingerichtet sind, ist es möglich, dass die Halteelemente unabhängig voneinander Verpackungen halten können. Dadurch, dass beide Halteelemente um eine gemeinsame Schwenkachse schwenkbar sind, werden neue Handhabungsmöglichkeiten für die gehaltenen Verpackungen oder Verpackungsabschnitte eröffnet, z. B. ein Falten von zwei Verpackungsabschnitten oder ein Aufeinanderlegen oder Ineinanderverschachteln von zwei einzelnen Verpackungen. Dadurch, dass die beiden Halteelemente in einer Ausgangsposition so angeordnet werden können, dass die erste und die zweite Halteseite nebeneinander und miteinander fluchtend ausgerichtet sind, wird es in Kombination mit der oben genannten Fähigkeit zum Halten einer Verpackung oder eines Verpackungsabschnitts möglich, dass auch Verpackungen oder Verpackungsabschnitte, die nur von einer Seite aus zugänglich sind, aufgenommen werden können. Bevorzugt sind die Halteseiten in der Ausgangsposition horizontal ausgerichtet. Der erste und der zweite Winkel können dabei unabhängig voneinander mindestens 5°, bevorzugt mindestens 10°, besonders bevorzugt mindestens 30° betragen.

In einer bevorzugten Variante kann in der ersten Endposition die Halteseite des ersten Halteelements im Wesentlichen vertikal und der Halteseite des zweiten Halteelements gegenüberliegend angeordnet sein. Dadurch werden eine Reihe zusätzlicher Handhabungsmöglichkeiten für aufgenommene Verpackungen eröffnet. Es ist z. B. denkbar, dass zwei Verpackungsabschnitte einer Verpackung jeweils von einem der beiden Halteelemente in der Ausgangsposition aufgenommen und gehalten werden. Durch Einnehmen der ersten Endposition können die beiden Verpackungsabschnitte der Verpackung zusammengefaltet werden. Es können auch zwei einzelne Verpackungen aufeinander gelegt oder ineinander verschachtelt werden. Zur Verbesserung der Lesbarkeit wird im Folgenden überwiegend der Ausdruck "Verpackungsabschnitt" verwendet werden. Dieser ist jedoch so zu verstehen, dass sowohl zwei zusammenhängende Verpackungsabschnitte derselben Verpackung gemeint sein können als auch einzelne Verpackungen, die aufeinander gelegt oder ineinander verschachtelt werden sollen.

Des Weiteren ist z. B denkbar, dass eine Verpackung zunächst in der Ausgangsposition von dem ersten Halteelement aufgenommen und gehalten wird, in der ersten Endposition von dem ersten Halteelement gelöst und vom zweiten Halteelement gehalten wird und so nach Einnehmen der Ausgangsposition gewendet abgelegt werden kann.

In einer weiteren Variante ist es denkbar, dass die Halteelemente in einer zweiten Endposition nur so weit verschwenkt werden, dass die beiden Halteseiten sich noch nicht gegenüber liegen. Eine aufgenommene Verpackung kann auf diese Weise leicht geknickt werden, um eine Handhabung in beschränkten Platzverhältnissen zu ermöglichen.

Es ist vorteilhaft, wenn das erste und das zweite Halteelement zum Halten einer Verpackung oder eines Verpackungsabschnitts während eines Schwenkens konfiguriert sind. Dies kann die Handhabungssicherheit erhöhen.

Bevorzugt sind das erste und das zweite Halteelement dazu eingerichtet, mit jeweils der gleichen Winkelgeschwindigkeit zu schwenken. Dadurch können beispielsweise Unwuchten und dadurch entstehende Vibrationen vermieden werden.

Besonders vorteilhaft ist es, wenn das erste und das zweite Halteelement dazu eingerichtet sind, synchron zu schwenken. Sowohl das Schwenken mit der gleichen Winkelgeschwindigkeit als auch ein synchrones Schwenken können dabei durch mechanische Getriebe gewährleistet werden, wie z. B. Verzahnungen oder aber Kulissen- oder Koppelgetriebe. Ebenso ist es denkbar, dass die Halteelemente unabhängig voneinander durch Aktoren betätigbar sind, die von einer Steuer- oder Regeleinheit steuer- bzw. regelbar sind. In diesem Fall kann das Schwenken mit der gleichen Winkelgeschwindigkeit und/oder das synchrone Schwenken durch eine entsprechende Steuerung und/oder Regelung gewährleistet werden.

Es ist vorteilhaft, wenn das erste und das zweite Halteelement dazu eingerichtet sind, in entgegengesetzte Richtungen zu schwenken. Dies kann beispielsweise Faltvorgänge wie den oben erwähnten ermöglichen.

Besonders günstig ist es, wenn das erste und das zweite Halteelement derart schwenkbar sind, dass sich die Schwenkachse während eines Schwenkens des ersten und zweiten Halteelements relativ zu dem Rahmen verlagert. Dies kann vorteilhaft ermöglichen, dass die beiden Halteelemente direkt beim oder direkt nach dem Aufnehmen der Verpackung oder des Verpackungsabschnitts mit dem Schwenken beginnen können. Dadurch kann Handhabungszeit eingespart und ggf. ein höherer Arbeitstakt erreicht werden. Dabei ist es denkbar, dass die Schwenkachse sich linear in eine Richtung verlagert. Besonders vorteilhaft ist es, wenn die Richtung der Verlagerung parallel zur Richtung der Schwerkraft verläuft.

Es ist vorstellbar, dass das erste und das zweite Halteelement mit Bezug zu der Schwenkachse asymmetrisch zueinander angeordnet sind. So können z. B. Verpackungen, deren Verpackungsabschnitte mit einem Versatz zueinander gefaltet werden müssen, ordnungsgemäß gefaltet werden. Dies kann z. B. bei Verpackungen mit mehreren Verpackungsmulden der Fall sein. Durch asymmetrisch zueinander angeordnete Halteelemente können solche Verpackungen derart gefaltet werden, dass die Verpackungsmulden eines ersten Verpackungsabschnitts in den Zwischenräumen zwischen den Verpackungsmulden des zweiten Verpackungsabschnitts angeordnet sind.

Es ist vorteilhaft, wenn wenigstens eines der Halteelemente eine Saugvorrichtung umfasst. Saugvorrichtungen sind besonders gut zum einseitigen Aufnehmen von Verpackungen geeignet, da es nicht notwendig ist, dass die Verpackung von mehreren Seiten zugänglich ist. Außerdem können die Verpackungen durch Saugvorrichtungen bereits während des Schneidprozesses gehalten werden. Dies kann vorteilhaft sein, da die Positionierung der Verpackungen auf diese Weise festgelegt und bekannt ist. Dadurch kann die weitere Handhabung erleichtert werden, insbesondere weil ein Umkippen oder andere Positionsänderungen der Verpackung nach dem Schneiden vermieden wird.

In einer Variante können das erste und das zweite Halteelement jeweils um höchstens 90°, bevorzugt höchstens 45°, besonders bevorzugt höchstens 30° schwenken. Ein derartig begrenzter Schwenkbereich kann dazu geeignet sein, einen Lastwechsel beim Schwenken der Halteelemente zu vermeiden. Wenn z. B. in der Ausgangsposition die erste und die zweite Halteseite des ersten und des zweiten Halteelements horizontal angeordnet sind, findet bei einem Schwenken um höchstens 90° kein Lastwechsel statt. Dadurch kann beispielsweise die Betätigung der Halteelemente durch pneumatisch betriebene Aktoren vereinfacht werden.

Es ist vorteilhaft, wenn das erste und/oder das zweite Haltelement einen mechanischen Greifer aufweist. Ein Greifer kann alternativ oder zusätzlich zu einer bereits vorher erwähnten Saugvorrichtung vorgesehen sein. Allgemein kann ein Greifer alternativ oder zusätzlich zu einer Haltevorrichtung des jeweiligen Halteelements vorgesehen sein. Bei dem bereits weiter oben beschriebenen Faltvorgang kann ein Greifer sicherstellen, dass die aufeinandergefalteten Verpackungsabschnitte auch beim Zurückschwenken in die Ausgangsposition gefaltet bleiben und sich nicht vor dem Ablegen wieder entfalten. Bei dem ebenfalls weiter oben beschriebenen Wendevorgang ist es beispielsweise ausreichend, wenn an dem ersten Halteelement entweder ein Greifer oder eine andere Haltevorrichtung, beispielsweise eine Saugvorrichtung, vorgesehen ist, das Gleiche gilt für das zweite Halteelement.

Die Erfindung bezieht auch auch auf ein Verfahren zum Betreiben einer Aufnahmevorrichtung der vorstehend beschriebenen Art. Das Verfahren zeichnet sich dadurch aus, dass durch das Schwenken des ersten und des zweiten Halteelements jeweils ein erster Verpackungsabschnitt und ein zweiter Verpackungsabschnitt relativ zueinander geschwenkt werden. Wie bereits eingangs erwähnt, wird auf diese Weise z. B. ein Falten zweier Verpackungsabschnitte relativ zueinander ermöglicht.

Ein weiteres Verfahren zum Betreiben einer Aufnahmevorrichtung der vorstehend beschriebenen Art umfasst die folgenden Schritte:
- Aufnehmen einer Verpackung durch Halten an dem ersten Halteelement,
- Schwenken des ersten und des zweiten Halteelements in die erste Endposition, wobei in der ersten Endposition die Halteseite des ersten Halteelements im Wesentlichen vertikal und der Halteseite des zweiten Halteelements gegenüberliegend angeordnet ist,
- Lösen der Verpackung von dem ersten Halteelement und Halten der Verpackung an dem zweiten Halteelement,
- Schwenken des ersten und des zweiten Halteelements in die Ausgangsposition.

Die Erfindung bezieht sich auf eine Aufnahmevorrichtung der vorstehend beschriebenen Art sowie auf Verfahren zu deren Betreiben. Im Folgenden werden vorteilhafte Ausführungsbeispiele anhand von Zeichnungen näher beschrieben.
- Figur 1: zeigt eine Seitenansicht einer erfindungsgemäßen Aufnahmevorrichtung nach einem ersten Ausführungsbeispiel.
- Figur 2: zeigt eine Seitenansicht einer erfindungsgemäßen Aufnahmevorrichtung gemäß einem zweiten Ausführungsbeispiel.
- Fig. 3 bis 5: zeigen eine perspektivische Ansicht einer erfindungsgemäßen Aufnahmeanordnung, in der zwei Halteelemente in einer unverschwenkten Ausgangsposition angeordnet sind bei einem Aufnahmevorgang.
- Figur 6: zeigt die Aufnahmevorrichtung aus Fig. 3 bis 5 in der ersten Endposition.
- Figur 7: zeigt eine perspektivische Ansicht der Aufnahmevorrichtung, die weitestgehend der aus Fig. 6 entspricht. Jedoch ist in dieser Figur ein Greifer betätigt.
- Fig. 8 und 9: zeigen eine perspektivische Ansicht der Aufnahmevorrichtung aus den vorhergehenden Figuren, in der die Halteelemente wieder in der Ausgangsposition angeordnet sind.
- Figur 10: zeigt eine schematische Darstellung verschiedener Verfahrensschritte eines Faltvorgangs für eine Verpackung durch asymmetrisch angeordnete Haltelemente.
- Figur 11: zeigt schematisch Verfahrensschritte eines Faltvorgangs für eine Verpackung durch symmetrisch angeordnete Halteelemente.
- Figur 12: zeigt schematisch Verfahrensschritte zum Wenden einer Verpackung.
- Figur 13: zeigt schematisch Verfahrensschritte zum Knicken einer Verpackung, um die Handhabung bei beengten Platzverhältnissen zu verbessern.

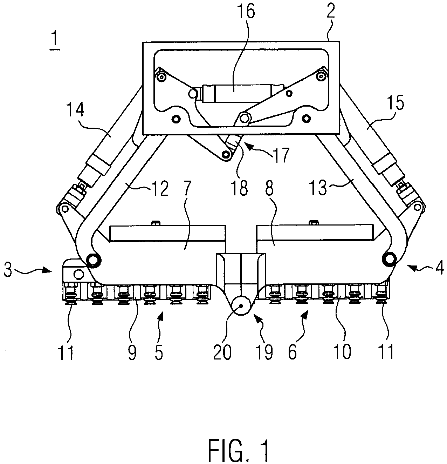

Fig. 1 zeigt eine Aufnahmevorrichtung 1 in einer Seitenansicht. Die Aufnahmevorrichtung 1 umfasst einen Rahmen 2. Dieser kann beispielsweise an einem (nicht dargestellten) Roboterarm oder Deltapicker, z. B. von einer Verpackungsmaschine, befestigt sein. Die Aufnahmevorrichtung 1 umfasst des Weiteren ein erstes Halteelement 3 und ein zweites Halteelement 4. Beide Halteelemente 3, 4 weisen jeweils eine Halteseite 5, 6 auf. In der in Fig. 1 dargestellten Ausgangsposition sind die erste Halteseite 5 und die zweite Halteseite 6 nebeneinander und miteinander fluchtend ausgerichtet. Im in Fig. 1 dargestellten Ausführungsbeispiel umfassen beide Halteelemente 3, 4 jeweils einen Schwenkarm 7, 8. Des Weiteren weisen die Halteelemente 3, 4 im vorliegenden Ausführungsbeispiel jeweils eine Haltevorrichtung 9, 10 auf. Dabei kann es sich wie im Ausführungsbeispiel um gleichartige Haltevorrichtungen handeln, z. B. mit Saugvorrichtungen 11, oder um unterschiedliche Haltevorrichtungen 9, 10. Wie später noch erläutert wird, können an einem Halteelement auch mehrere unterschiedliche Haltevorrichtungen vorgesehen sein.

Die Halteelemente 3, 4 können, wie im Ausführungsbeispiel, jeweils schwenkbar mit einem ersten und einem zweiten Verbindungsarm 12, 13 verbunden sein. Die Verbindungsarme 12, 13 können wiederum schwenkbar mit dem Rahmen 2 verbunden sein. Wie ebenfalls beispielhaft in Fig. 1 dargestellt, können die Halteelemente 3, 4 durch jeweils einen ersten und einen zweiten Pneumatikzylinder 14, 15 betätigbar sein. Die Pneumatikzylinder 14, 15 können dazu beispielsweise einerseits schwenkbar mit dem ersten und dem zweiten Verbindungsarm 12, 13 und andererseits schwenkbar mit dem ersten und dem zweiten Schwenkarm 7, 8 verbunden sein. Ein dritter Pneumatikzylinder 16 kann schwenkbar mit dem ersten und dem zweiten Verbindungsarm 12, 13 zur Schließkraftunterstützung verbunden sein. Dazu kann der dritte Pneumatikzylinder 16 dazu konfiguriert sein, am Ende der Schwenkbewegung nachzudrücken. Auch eine Dämpfungsfunktion des dritten Pneumatikzylinders ist denkbar. Insbesondere kann der dritte Pneumatikzylinder 16 einerseits schwenkbar mit dem ersten Verbindungsarm 12 und andererseits schwenkbar mit dem zweiten Verbindungsarm 13 verbunden sein.

Zusammen mit weiteren Komponenten können die Verbindungsarme 12, 13 ein Koppelgetriebe 17 bilden. Im vorliegenden Ausführungsbeispiel ist als eine weitere Komponente eine Verbindungsstrebe 18 vorgesehen. Diese kann z. B. einerseits schwenkbar mit dem ersten Verbindungsarm 12 und andererseits schwenkbar mit dem zweiten Verbindungsarm 13 verbunden sein. Zwischen dem ersten und dem zweiten Halteelement 3, 4 kann ein Gelenk 19 vorgesehen sein. Dieses kann ein Schwenken des ersten und des zweiten Halteelements 3, 4 um eine gemeinsame Schwenkachse 20 ermöglichen.

In Fig. 1 ist darüber hinaus zu erkennen, dass das erste und das zweite Halteelement 3, 4 mit Bezug zu der Schwenkachse 20 asymmetrisch zueinander angeordnet sind. Im vorliegenden Ausführungsbeispiel sind dazu die erste und die zweite Haltevorrichtung 9, 10 unterschiedlich weit entfernt von der Schwenkachse 20 am ersten bzw. zweiten Schwenkarm 7, 8 angeordnet. Es ist jedoch auch denkbar, dass die Asymmetrie durch unterschiedliche Schwenkarme 7, 8 gewährleistet wird. Eine asymmetrische Anordnung der Halteelemente 3, 4 kann bei bestimmten Verpackungsarten vorteilhaft sein, wie später noch erläutert werden wird.

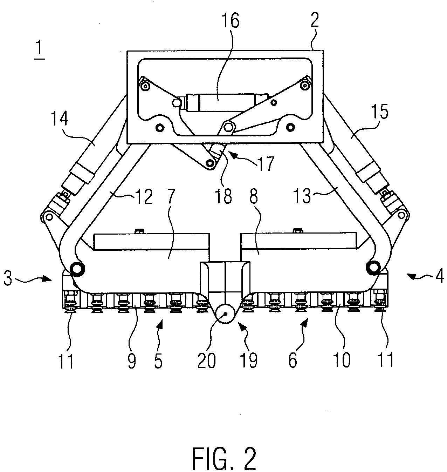

Fig. 2 zeigt eine Aufnahmevorrichtung 1 gemäß einem weiteren Ausführungsbeispiel. Dieses unterscheidet sich lediglich dadurch von dem vorstehend mit Bezug auf Fig. 1 beschriebenen Ausführungsbeispiel, dass das erste und das zweite Halteelement 3, 4 mit Bezug auf die Schwenkachse 20 symmetrisch zueinander angeordnet sind.

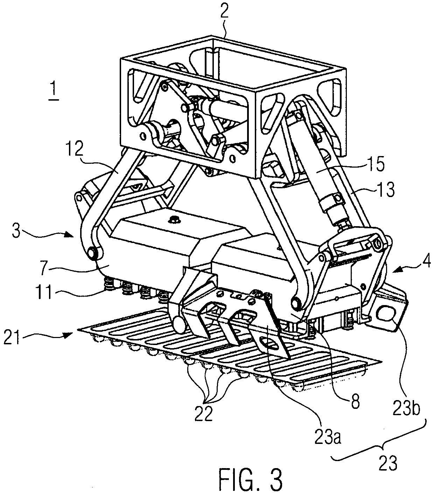

Die Fig. 3 bis 9 veranschaulichen die Funktionsweise der Aufnahmevorrichtung 1. Zur Verbesserung der Übersichtlichkeit sind nicht alle Bezugszeichen angegeben. Bei der in den Fig. 3 bis 9 dargestellten Aufnahmevorrichtung 1 handelt es sich um eine Aufnahmevorrichtung 1 mit asymmetrisch zueinander angeordneten Halteelementen 3, 4, wie sie bereits mit Bezug auf Fig. 1 beschrieben wurde. Zusätzlich zu der Aufnahmevorrichtung 1 ist nun eine Verpackung 21 zu erkennen. Die Verpackung 21 kann, wie im Ausführungsbeispiel gezeigt, mehrere Mulden 22 aufweisen. An dem zweiten Halteelement 4 ist im vorliegenden Ausführungsbeispiel eine Zusatzhaltevorrichtung vorgesehen. Dabei kann es sich, wie dargestellt, um einen mechanischen Greifer 23 handeln, der beispielsweise einen ersten und einen zweiten Greifarm 23a, 23b aufweisen kann. Ein Greifer 23 kann jedoch auch als erste oder zweite Haltevorrichtung 9, 10 des ersten oder zweiten Halteelements 3, 4 vorgesehen sein.

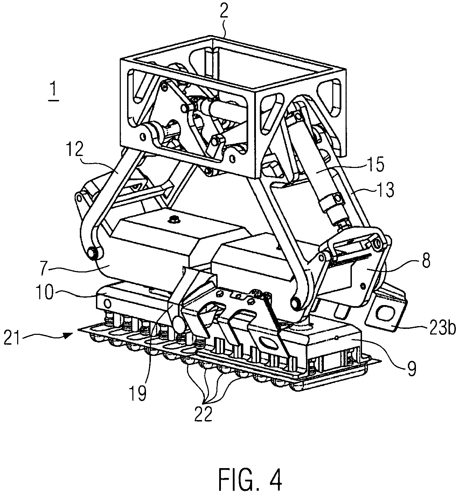

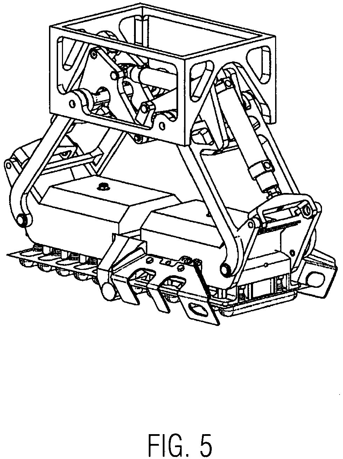

In Fig. 4 ist zu erkennen, dass die Haltevorrichtungen 9, 10 der Halteelemente 3, 4 die Verpackung 21 bereits halten, deren Lage aber noch nicht verändert haben. Hier wird deutlich, dass die Verpackung 21 nur von einer Seite aus, beispielsweise wie in diesem Fall von einer den Verpackungsmulden 22 gegenüberliegenden Oberseite, angefahren werden kann. In Fig. 5 wurde die Verpackung 21 angehoben.

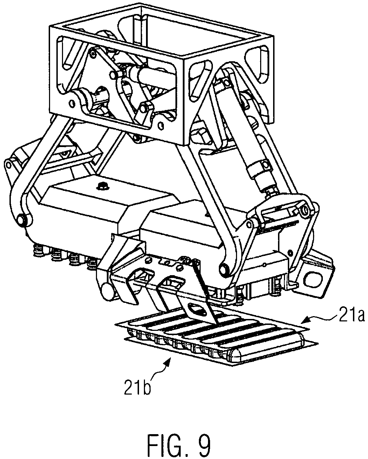

Durch geeignete Betätigung der Pneumatikzylinder 14, 15, 16 können das erste und das zweite Halteelement 3, 4 nun in Richtung einer ersten Endposition geschwenkt werden. Während des Schwenkens wird die Verpackung 21 weiterhin von dem ersten und dem zweiten Halteelement 3, 4 gehalten. Dabei wird ein erster Verpackungsabschnitt 21 a (siehe Fig. 9) von dem zweiten Halteelement 4 gehalten. Ein zweiter Verpackungsabschnitt 21 b (siehe ebenfalls Fig. 9) wird vom ersten Halteelement 3 gehalten.

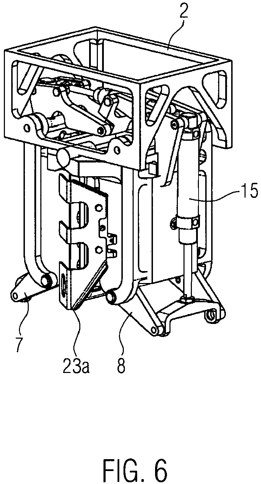

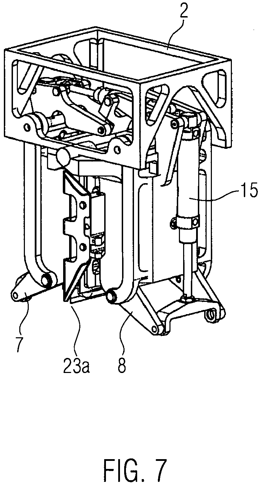

In der in Fig. 6 dargestellten ersten Endposition sind die (hier nicht erkennbare) erste und zweite Halteseite 5, 6 des ersten und zweiten Halteelements 3, 4 im Wesentlichen vertikal und einander gegenüber liegend angeordnet. Der Greifer 23 (in dieser Ansicht ist nur der erste Greifarm 23a erkennbar) ist noch geöffnet. Dieser kann nun, wie in Fig. 7 dargestellt, geschlossen werden, so dass die gefaltete Verpackung 21 sich beim Zurückschwenken der Halteelemente 3, 4 in die Ausgangsposition nicht wieder entfalten kann. Das Schließen des Greifers kann erfolgen, bevor oder nachdem der zweite Verpackungsabschnitt 21 b von dem ersten Halteelement 3 gelöst worden ist. Auch eine gleichzeitige Ausführung ist denkbar.

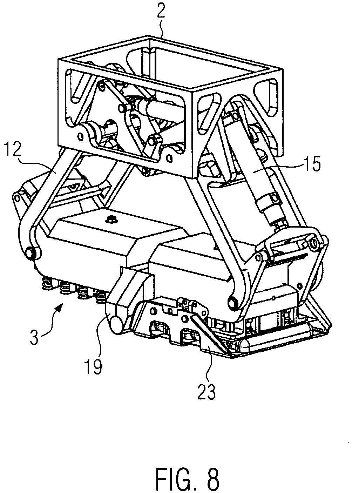

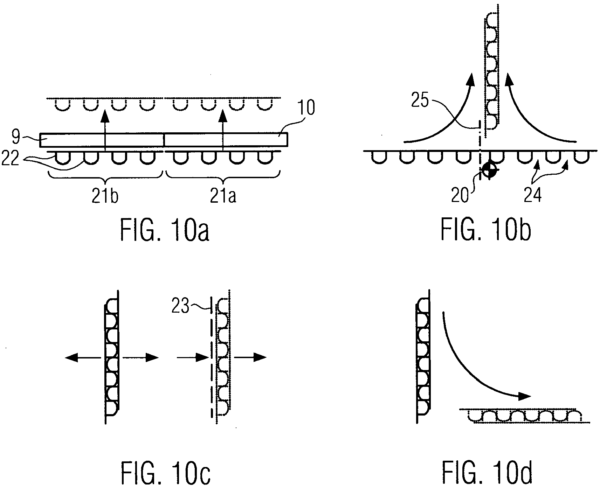

In Fig. 8 ist wieder die Ausgangsposition dargestellt. Der Greifer 23 ist noch geschlossen. In Fig. 9 ist zu sehen, dass er geöffnet und die gefaltete Verpackung 21 dadurch abgelegt wurde. Alternativ kann es sich auch um zwei ineinander verschachtelte, einzelne Verpackungen handeln. Es ist erkennbar, dass die Mulden 22 der Verpackungsabschnitte 21 a, 21 b alternierend ineinandergreifen, wie dies im Folgenden mit Bezug auf Fig. 10 noch näher erläutert werden wird.

In den Fig. 10a-10d sind verschiedene Verfahrensschritte eines erfindungsgemäßen Verfahrens zum Betreiben der Aufnahmevorrichtung 1 dargestellt. Da die Bewegung der Komponenten der Aufnahmevorrichtung 1 im Wesentlichen die gleiche bleibt, erfolgt die Erläuterung anhand schematischer Darstellungen der Verpackung 21. Fig. 10a stellt die Verpackung 21 mit den Verpackungsabschnitten 21a und 21b sowie die erste und die zweite Haltevorrichtung 9, 10 dar. Die in durchgezogenen Linien dargestellte Konfiguration der Verpackung entspricht der in Fig. 4 dargestellten. Die Pfeile stellen die Krafteinwirkung der Haltevorrichtungen 9, 10 auf die Verpackung 21 dar. Die mit punktierten Linien dargestellte Konfiguration der Verpackung 21 entspricht der in Fig. 5 dargestellten Konfiguration.

Die in Fig. 10b mit durchgezogenen Linien dargestellte Konfiguration der Verpackung 21 entspricht ebenfalls der in Fig. 5 dargestellten Konfiguration. Hier sind Zwischenräume 24 zwischen den Mulden 22 der Verpackung 21 kenntlich gemacht. Auch die Lage der Schwenkachse 20 ist angedeutet. Es ist erkennbar, dass diese nicht in einer angedeuteten Symmetrieebene 25 der Verpackung 21 liegt. Die Pfeile deuten in dieser Figur die Schwenkbewegung des ersten und des zweiten Halteelements 3, 4 an. Die daraus folgende, in gepunkteten Linien dargestellte Konfiguration entspricht der in Fig. 6 dargestellten Konfiguration.

Die in Fig. 10c mit durchgezogenen Linien dargestellte Konfiguration entspricht ebenfalls der in Fig. 6 dargestellten Konfiguration. Hier deuten die Pfeile wiederum die auf die Verpackung 21 einwirkenden Haltekräfte an. In der durch punktierte Linien dargestellten Konfiguration ist der Greifer 23 geschlossen, so dass diese Darstellung der in Fig. 7 dargestellten Konfiguration entspricht. Durch die Pfeile wird deutlich, in welche Richtung Kräfte auf die Verpackung 21 einwirken.

In Fig. 10d wird schließlich durch den Pfeil die Schwenkbewegung zurück in die in Fig. 8 dargestellte Ausgangsposition erkennbar. Letztere ist wiederum durch gepunktete Linien dargestellt.

Durch die mit Bezug auf die Schwenkachse 20 asymmetrische Anordnung der Verpackung, die durch die asymmetrische Anordnung des ersten und des zweiten Halteelements 3, 4 erreicht wird, wurde die Verpackung derart zusammengefaltet, dass die Mulden 22 des ersten Verpackungsabschnitts 21 a in den Zwischenräumen 24 zwischen den Mulden 22 des zweiten Verpackungsabschnitts 21 b angeordnet sind und die Mulden des zweiten Verpackungsabschnitts 22b in den Zwischenräumen 24 des ersten Verpackungsabschnitts 21a angeordnet sind.

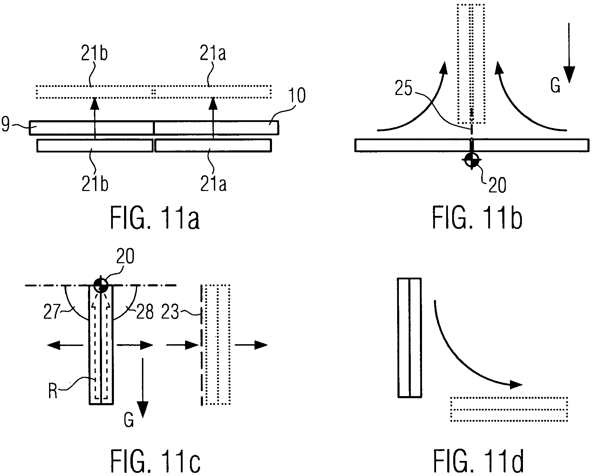

Die Fig. 11a bis 11d veranschaulichen im Wesentlichen das gleiche Verfahren. Ein Unterschied besteht darin, dass die Verpackung 21 mit den Verpackungsabschnitten 21 a und 21 b keine Mulden aufweist. Ein noch wichtigerer Unterschied ist allerdings, dass, wie in Fig. 11b zu sehen, die Schwenkachse 20 in diesem Ausführungsbeispiel in der Symmetrieebene 25 der Verpackung 21 liegt. Hier sind entsprechend das erste und das zweite Halteelement 3, 4 symmetrisch angeordnet, wie in Fig. 2 dargestellt. Durch diese symmetrische Anordnung des ersten und zweiten Halteelements 3, 4 sind auch der erste und zweite Verpackungsabschnitt 21a und 21b symmetrisch zur Schwenkachse 20 angeordnet und werden folglich im Wesentlichen deckungsgleich aufeinander gefaltet. Die in den Fig. 11c und 11d dargestellten Verfahrensschritte entsprechen im Wesentlichen den in Fig. 10c und 10d dargestellten.

In Fig. 11c ist zudem mit unterbrochenen Linien eine Richtung R angedeutet in der sich die Schwenkachse 20 verlagert hat. Wie im beschriebenen Ausführungsbeispiel, kann die Richtung R beispielsweise parallel, bevorzugt entgegengesetzt der Schwerkraft G verlaufen. Desweiteren ist in Fig. 11c ein erster und ein zweiter Winkel 27, 28 angegeben, um den das erste bzw. zweite Halteelement 3, 4 und somit auch der erste und der zweite Verpackungsabschnitt 21a, 21b verschwenkt wurden. Im vorliegenden Ausführungsbeispiel beträgt sowohl der erste als auch der zweite Winkel 27, 28 jeweils 90°.

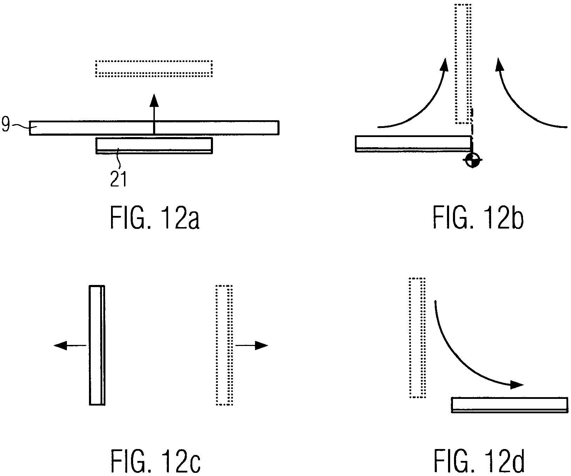

In den Fig. 12a bis 12d sind schematisch Verfahrensschritte eines weiteren erfindungsgemäßen Verfahrens veranschaulicht. Die Verpackung 21 bedarf in diesem Ausführungsbeispiel jedoch keiner Faltung. Sie soll durch das anhand von Fig. 12 erläuterte Verfahren lediglich gewendet werden. Zu diesem Zweck wird sie von der ersten Haltevorrichtung 9 des ersten Halteelements 3 gehalten und angehoben, wie in Fig. 12a dargestellt. Nach dem in Fig. 12b dargestellten Schwenken des ersten und des zweiten Halteelements 3, 4 in die erste Endposition wird die Verpackung 21, wie in Fig. 12 dargestellt, vom ersten Halteelement 3 gelöst und vom zweiten Halteelement 4 gehalten. Dabei ist es vorteilhaft, wenn zumindest kurzzeitig die Verpackung 21 von beiden Halteelementen 3, 4 gehalten wird. Nach dem in Fig. 12d dargestellten Schwenken in die Ausgangsposition kann die gewendete Verpackung 21 wieder abgelegt werden.

Die Bewegung der Aufnahmevorrichtung 1 bleibt dabei die gleiche wie in den mit Bezug auf die Fig. 10 und 11 beschriebenen Verfahren. Wie in Fig. 12b angedeutet, kann dieses Verfahren durch mit Bezug auf die Schwenkachse 20 symmetrisch angeordnete Halteelemente 3, 4 durchgeführt werden. Es ist jedoch auch denkbar, dass das anhand von Fig. 12 beschriebene Verfahren durch mit Bezug auf die Schwenkachse 20 asymmetrisch angeordnete Halteelemente 3, 4 durchgeführt wird. Für das anhand von Fig. 12 beschriebene Verfahren ist kein Greifer 23 notwendig, wenn sowohl eine untere als auch eine obere Oberfläche der Verpackung 21 zum Ansaugen geeignet ist. Ist eine der beiden Oberflächen der Verpackung 21 jedoch nicht zum Ansaugen geeignet, sollte an dem dieser Oberfläche zugeordneten Halteelement 3, 4 ein Greifer 23 vorgesehen sein. Bei den zur Anwendung dieses Verfahrens eingesetzten Haltevorrichtungen 9, 10 kann es sich sowohl um die vorstehend beschriebenen Saugvorrichtungen 11 handeln, als auch um einen Greifer 23. Auch Kombinationen aus einer Saugvorrichtung 11 an dem ersten Halteelement 3 und einem Greifer 23 an dem zweiten Halteelement 4 ist denkbar.

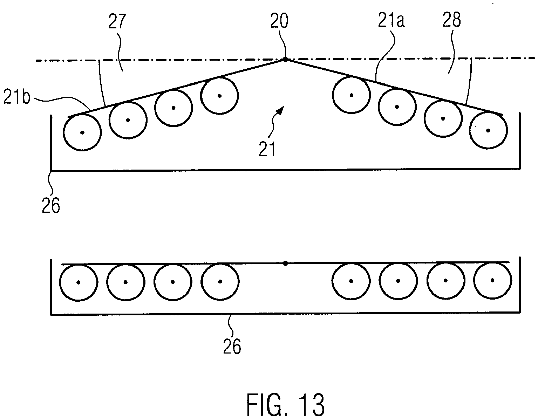

Ein weiterer vorteilhafter Anwendungsfall der Aufnahmevorrichtung 1 soll im Folgenden anhand von Fig. 13 beschrieben werden. Hierbei wird die Verpackung 21 nicht vollständig gefaltet. Sie soll vielmehr in eine Umverpackung 26 eingelegt werden. Es sind Fälle denkbar, in denen die Umverpackung 26 für die Ausmaße der Verpackung 21 knapp bemessen ist. In diesem Fall ist es vorteilhaft, wenn durch die Aufnahmevorrichtung 1 die Verpackungsabschnitte 21 b und 21 a durch eine Schwenkung des ersten und des zweiten Halteelements 3, 4 in eine zweite Endposition nur leicht aufeinander zu geknickt werden. Auf diese Weise kann ein einfacheres Einlegen in das Innere der Umverpackung 26 ermöglicht werden. Es ist zu erkennen, dass der erste und der zweite Winkel 27, 28 in diesem Ausführungsbeispiel weniger als 45° betragen. Je nach Bedarf ist es in diesem Ausführungsbeispiel außerdem denkbar, dass die Winkel 27, 28 unterschiedlich groß gewählt werden.

## Patentansprüche

1. Aufnahmevorrichtung (1) für Verpackungen (21), umfassend: einen Rahmen (2), an dem ein erstes und ein zweites Halteelement (3, 4) montiert sind, die jeweils eine Halteseite (5, 6) aufweisen, die jeweils zum Halten einer Verpackung (21) oder eines Verpackungsabschnitts (21a, 21b) eingerichtet sind, wobei das erste und das zweite Halteelement (3, 4) dazu eingerichtet sind, in einer Ausgangsposition derart angeordnet zu sein, dass die erste und die zweite Halteseite (5, 6) nebeneinander und miteinander fluchtend ausgerichtet sind, und wobei sowohl das erste als auch das zweite Halteelement (3, 4) um eine gemeinsame Schwenkachse (20) schwenkbar sind, sodass in einer ersten Endposition sowohl das erste als auch das zweite Halteelement (3, 4) gegenüber der Ausgangsposition um jeweils einen ersten und einen zweiten Winkel (27, 28) verschwenkt angeordnet sind, wobei sowohl der erste als auch der zweite Winkel (27, 28) größer als Null sind.

2. Aufnahmevorrichtung nach Anspruch 1, **dadurch gekennzeichnet, dass** in der ersten Endposition die Halteseite (5) des ersten Halteelements (3) im Wesentlichen vertikal und der Halteseite (6) des zweiten Halteelements (4) gegenüberliegend angeordnet ist.

3. Aufnahmevorrichtung nach Anspruch 1 oder 2, **dadurch gekennzeichnet, dass** das erste und das zweite Halteelement (3, 4) zum Halten einer Verpackung (21) oder eines Verpackungsabschnitts (21 a, 21 b) während eines Schwenkens konfiguriert sind.

4. Aufnahmevorrichtung nach einem der vorangehenden Ansprüche, **dadurch gekennzeichnet, dass** das erste und das zweite Halteelement (3, 4) dazu eingerichtet sind, mit der gleichen Winkelgeschwindigkeit zu schwenken.

5. Aufnahmevorrichtung nach einem der vorangehenden Ansprüche, **dadurch gekennzeichnet, dass** das erste und das zweite Halteelement (3, 4) dazu eingerichtet sind, synchron zu schwenken.

6. Aufnahmevorrichtung nach Anspruch einem der vorangehenden Ansprüche, **dadurch gekennzeichnet, dass** das erste und das zweite Halteelement (3, 4) dazu eingerichtet sind, in entgegengesetzte Richtungen zu schwenken.

7. Aufnahmevorrichtung nach einem der vorangehenden Ansprüche, **dadurch gekennzeichnet, dass** das erste und das zweite Halteelement (3, 4) derart schwenkbar sind, dass sich die Schwenkachse (20) während eines Schwenkens des ersten und zweiten Halteelements (3, 4) relativ zu dem Rahmen (2) verlagert.

8. Aufnahmevorrichtung nach Anspruch 7, **dadurch gekennzeichnet, dass** die Schwenkachse (20) sich linear in einer Richtung (R) verlagert.

9. Aufnahmevorrichtung nach Anspruch 8, **dadurch gekennzeichnet, dass** die Richtung (R) parallel zur Richtung der Schwerkraft (G) verläuft.

10. Aufnahmevorrichtung nach Anspruch einem der vorangehenden Ansprüche, **dadurch gekennzeichnet, dass** das erste und das zweite Halteelement (3, 4) mit Bezug zu der Schwenkachse (20) asymmetrisch zueinander angeordnet sind.

11. Aufnahmevorrichtung nach Anspruch einem der vorangehenden Ansprüche, **dadurch gekennzeichnet, dass** wenigstens eines der Halteelemente (3, 4) eine Saugvorrichtung (11) umfasst.

12. Aufnahmevorrichtung nach Anspruch einem der vorangehenden Ansprüche, **dadurch gekennzeichnet, dass** das erste und das zweite Halteelement (3, 4) jeweils um höchstens 90°, bevorzugt höchstens 45°, besonders bevorzugt höchstens 30° schwenken.

13. Aufnahmevorrichtung nach Anspruch einem der vorangehenden Ansprüche, **dadurch gekennzeichnet, dass** das erste und/oder das zweite Halteelement (3, 4) einen Greifer (23) aufweist.

14. Verfahren zum Betreiben einer Aufnahmevorrichtung nach einem der vorangehenden Ansprüche, **dadurch gekennzeichnet, dass** durch das Schwenken des ersten und zweiten Halteelements (3, 4) jeweils ein erster Verpackungsabschnitt (21a) und ein zweiter Verpackungsabschnitt (21 b) relativ zueinander geschwenkt werden.

15. Verfahren zum Betreiben einer Aufnahmevorrichtung nach einem der Ansprüche1-13, **gekennzeichnet durch** die folgenden Schritte:
- Aufnehmen einer Verpackung (21) **durch** Halten an dem ersten Halteelement (3),
- Schwenken des ersten und des zweiten Halteelements (3, 4) in die erste Endposition, wobei in der ersten Endposition die Halteseite (5) des ersten Halteelements (3) im Wesentlichen vertikal und der Halteseite (4) des zweiten Halteelements (6) gegenüberliegend angeordnet ist
- Lösen der Verpackung (21) von dem ersten Halteelement (3) und Halten der Verpackung an dem zweiten Halteelement (4),
- Schwenken des ersten und des zweiten Halteelements (3, 4) in die Ausgangsposition.
